Europäisches Patentamt

European Patent Office

Office européen des brevets

(19)

(11) Veröffentlichungsnummer: **0 051 555**
**B1**

(12) **EUROPÄISCHE PATENTSCHRIFT**

(45) Veröffentlichungstag der Patentschrift:
01.08.84

(21) Anmeldenummer: 81730104.7

(22) Anmeldetag: 07.10.81

(51) Int. Cl.³: **H 02 H 7/08**

(54) Schutzschaltungs-Vorrichtung für einen Gleichstrommotor, insbesondere für einen Drucker-Aufwickel-Gleichstrommotor.

(30) Priorität: 03.11.80 DE 3042138

(43) Veröffentlichungstag der Anmeldung:
12.05.82 Patentblatt 82/19

(45) Bekanntmachung des Hinweises auf die Patenterteilung:
01.08.84 Patentblatt 84/31

(84) Benannte Vertragsstaaten:
FR GB IT NL SE

(56) Entgegenhaltungen:
DE - A - 2 431 279
DE - A - 2 517 766
US - A - 3 358 206
US - A - 3 427 506
US - A - 3 564 337

(73) Patentinhaber: MANNESMANN Aktiengesellschaft,
Mannesmannufer 2, D-4000 Düsseldorf 1 (DE)

(72) Erfinder: Babsch, Alfred, St.-Jakob-Strasse 14,
D-7900 Ulm-Söflingen (DE)

(74) Vertreter: Presting, Hans-Joachim et al,
Herbertstrasse 22, D-1000 Berlin 33 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schutzschaltungs-Vorrichtung für einen Gleichstrommotor, insbesondere für einen Drucker-Aufwickel-Gleichstrommotor, wobei Messmittel zur Ableitung einer Messspannung aus dem Motorstrom und ein Steuer-Transistor zum Ein- und Ausschalten des Motorstroms in Reihe mit dem Motor vorgesehen sind.

Eine derartige Schutzschaltungs-Vorrichtung bezweckt, Schäden an der Motorwicklung zu vermeiden, wenn das Lastdrehmoment unzulässige Werte erreicht.

In Druckern, insbesondere der Matrixbauart, wurde bisher unzulässigen Lastdrehmomenten, die beispielsweise durch Klemmen des Papiers in der Papierführung verursacht werden, zunächst durch mechanische Mittel entgegengewirkt.

Als mechanische Mittel wurden Rutschkupplungen eingesetzt. Derartige Kupplungen sind jedoch auf ein festes Drehmoment eingestellt, bei dessen Erreichen schon ein Drehen der Papierwalze nicht mehr stattfindet.

Ein weiteres mechanisches Mittel bilden Magnetkupplungen. Derartigen Kupplungen haftet jedoch der Nachteil an, dass sie entweder in Eingriff stehen und ein Drehmoment übertragen oder eine Drehmomentübertragung überhaupt nicht stattfindet. Im ersten Fall wird der Elektromotor auch dann belastet, wenn ein Drehen eines Aufwickelantriebs nicht möglich ist.

Sodann besteht die Möglichkeit, Wechselstrom-Synchron-Motoren als Motor für einen Aufwickelantrieb einzusetzen. Solche Elektromotoren geben jedoch nur ein geringes Drehmoment ab, wenn sie als «Schrittmotor» eingesetzt werden, was bei dem schrittweisen Vorschub des Papiers in Druckern, die zeilenweise arbeiten, verlangt wird.

Einem Gleichstrommotor, der auch im Einsatz als «Schrittmotor» ein genügend hohes Drehmoment abgibt, ist demnach der Vorzug zu geben.

Es ist bekannt (DE-A1-2 517 766), mittels einer Schutzschaltung für einen Matrixdrucker eine Einzelfunktion auf den zeitlichen Ablauf zu überwachen. Dabei wird, um Störungen schnell zu erkennen, dem zu überwachenden Schaltelement ein bei jeder Initialisierung des Schaltelements angestossenes, wiedertriggerbares Zeitglied zugeordnet, dessen Haltezeit grösser ist als die Ablaufzeit der Mechanik. Die Schutzschaltung stellt jedoch auf eine Zeit ab, nämlich auf die Ablaufzeit einer Mechanik. Die Ablaufzeit einer Mechanik kann aber grösser sein als die zulässige Zeit bei Überschreitung eines zulässigen Stroms. Die bekannte Lösung ist daher nicht für solche Fälle anwendbar, in denen mechanische Vorgänge voneinander abhängig ablaufen, so dass bei Störung des ersten mechanischen Vorgangs bereits kein funktionsmässig weiterer Vorgang ablaufen kann.

Die US-A-3 358 206 betrifft eine Steuerschaltung für einen Gleichstrommotor, wobei eine Strombegrenzungsschaltung vorgesehen ist. Die Steuerschaltung besteht aus einem Oszillator, einem bistabilen Multivibrator (Kippstufe) und einer Schaltung zur Einstellung der Einschaltdauer, die einen in Reihe mit dem Motor liegenden Steuertransistor beaufschlagt. Die Strombegrenzungsschaltung verringert die Dauer der Steuerimpulse zum Transistor, wenn der Strom im Motor einen vorbestimmten Pegel überschreitet. Der Strom im Motor wird mittels eines Reihen-Widerstands gemessen, der eine zum Motorstrom proportionale Spannung an einen als Komparator geschalteten Thyristor liefert. Wenn der Motorstrom bzw. die Spannung am Messwiderstand den vorbestimmten Pegel überschreitet, unterbricht die Strombegrenzungsschaltung die Stromversorgung zum Motor. Der Motor wird aber nach einer bestimmten Zeitverzögerung wieder angesteuert. Diese Zeitverzögerung ist durch einen Kondensator bestimmt, der durch Wiederstände aufgeladen wird und durch einen anderen Kreis entladen wird.

Aus der DE-A-2 431 279 ist eine Schutzschaltung für einen mittels einer Darlingtonstufe gesteuerten Gleichstrommotor bekannt. Wenn der Motor in der Anlaufphase blockiert ist, wird die Stromversorgung des Motors nach Aufladen eines Kondensators unterbrochen.

Der Erfindung liegt die Aufgabe zugrunde, eine Schutzschaltungs-Vorrichtung für einen Gleichstrommotor der eingangs genannten Art zu schaffen, die den Motor bei einem ihm abverlangtem unzulässig hohen Drehmoment zwar abschaltet, ihn aber durch feinfühliges Abtasten zum Wiederanlaufen und Weiterdrehen veranlasst, sobald das unzulässig hohe Drehmoment sinkt bzw. der damit verbundene hohe Strom abfällt.

Diese Aufgabe wird erfindungsgemäss gelöst durch eine Kippstufe mit einem Ausgang, der im aktiven Zustand den Steuer-Transistor leitend steuert, mit einem Schwelleneingang, der den Ausgang inaktiv schaltet, wenn die Spannung am Schwelleneingang über einer oberen Spannungsgrenze liegt, und mit einem weiteren Eingang, der den Ausgang aktiv schaltet, wenn die Spannung am weiteren Eingang unter einer unteren Spannungsgrenze liegt, sowie durch einen mit dem Ausgang der Messmittel verbundenen Kondensator, der die Spannungen an die Eingänge der Kippstufe abgibt, wobei der Kondensator durch die Messspannung mit einer bestimmten Zeitkonstante aufgeladen wird und, wenn die Kippstufe inaktiv geschaltet ist, durch einen anderen Kreis mit einer ca. 10mal längeren Zeitkonstante entladen wird.

Die weitere Ausgestaltung des Erfindungsgegenstands geht aus den unabhängigen Ansprüchen hervor.

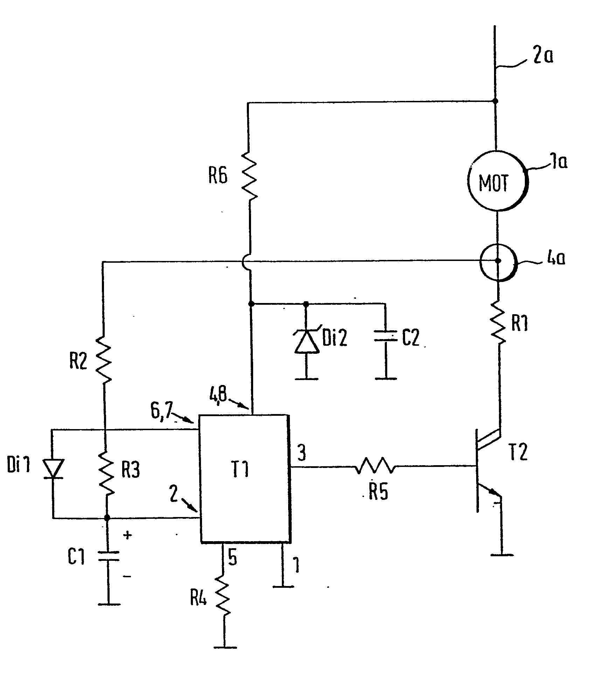

Ein Ausführungsbeispiel der Erfindung ist in der Zeichnung dargestellt und wird im folgenden näher beschrieben. Die Zeichnung besteht aus einem elektrischen Schaltplan, dem der Aufwickelantrieb eines Matrixdruckers zugrundegelegt ist.

Der Gleichstrommotor 1a liegt im Laststromkreis 2a und wird über einen Steuer-Transistor T2 gesteuert, der den Basisstrom über eine Kippstufe T1 und einen nachgeschalteten Widerstand R5 erhält, der den Strom für die Basis des Steuer-Transistors T2 aus der Kippstufe T1 begrenzt. Der Widerstand R1 stellt einen Strommesswiderstand zwischen dem Steuer-Transistor T2 und dem Gleichstrommotor 1a dar.

Der Steuer-Transistor T2 (mit Transistoren der Gattung NPN) liegt am Ausgang 3 der Kippstufe T1, deren Anschluss 1 an Masse liegt. An den Eingang 5 ist ein Widerstand R4 gelegt, der so dimensioniert ist, dass die Schwellenspannung am Eingang 6 auf den gewünschten Spannungsbereich verschoben wird. Ansonsten ist der Eingang 5 nicht beschaltet. Der Eingang 6 bestimmt die Spannung, bei welcher der Ausgang 3 inaktiv geschaltet wird, und der Eingang 2 das Schalten in den aktiven Zustand.

Zwischen dem Gleichstrommotor 1a und dem Widerstand R1 befindet sich ein Messpunkt 4a, der über Widerstände R2 bzw. R3 zu einem Kondensator C1 führt, der wiederum mit dem negativen Pol an Masse liegt. Der positive Pol des Kondensators C1 liegt am Eingang 2 der Kippstufe T1. Parallel zum Widerstand R3 ist eine Diode Di1 geschaltet. Das Aus-/Einschalt-Verhältnis an der Kippstufe T1 wird durch das Verhältnis der Widerstände R2/R3 bestimmt.

Die Kippstufe T1 wird über einen Vorwiderstand R6 aus dem Laststromkreis 2a mit Strom versorgt. Eine Z-Diode Di2 und ein zu ihr parallelliegender Kondensator C2 stabilisieren die Versorgungsspannung.

Die Funktion der Vorrichtung ist folgende:

Der Gleichstrommotor 1a benötigt bei Leerlauf weniger Strom als wenn er durch ein unzulässiges Antriebsmoment überlastet oder gar blockiert wird. Bei unzulässig hohem Strom steigt dementsprechend die Spannung, die im Messpunkt 4a gemessen wird. Im Zustand überhöhten Stromverbrauchs, d.h. einer Spannung bei 4a, die über $2/3$ der vorherbestimmten Versorgungsspannung liegt, schaltet der als Darlington-Stufe ausgeführte Steuertransistor T2 den Gleichstrommotor 1a ab. Am Eingang 6 (Schwelleneingang) wird fortwährend abgefühlt, ob eine Spannung vorliegt, die den Ausgang 3 der Kippstufe T1 inaktiv schaltet. Liegt die Versorgungsspannung im Punkt 4a unter $1/3$ der Versorgungsspannung, lässt der Eingang 2 der Kippstufe T1 den Ausgang 3 in den aktiven Zustand kippen. Der Ausgang 3 wird daher aktiv, wenn die Spannung am Eingang 2 unterhalb $1/3$ der Versorgungsspannung fällt, er wird jedoch inaktiv, wenn die Spannung am Eingang 6 $2/3$ der Versorgungsspannung überschreitet. Am Eingang 4, 8 der Kippstufe T1 ist die Z-Diode Di2 zusammen mit einem parallelliegenden Kondensator C2 angeschlossen, wodurch der Kippstufe T1 eine stabilisierte Spannung zugeführt wird.

Beim Einschalten der Kippstufe T1, d.h. bei Anlegen der Versorgungsspannung, ist der Kondensator C1 entladen. Dies bedeutet, dass der Eingang 2 T1 weniger als $1/3$ der Versorgungsspannung erhält. In dieser Phase wird der Ausgang 3 aktiviert. Daraufhin schaltet der Steuer-Transistor T2 den Gleichstrommotor 1a ein. Der Gleichstrommotor 1a nimmt zunächst einen höheren Anlaufstrom auf. Sobald der Motor sich mit der Betriebsdrehzahl dreht, sinkt dieser Anlaufstrom auf den Betriebsstromwert ab. Um diesen Anlauf zu ermöglichen, ist die Zeitkonstante durch den Widerstand R2 entsprechend dimensioniert.

Sollte der Gleichstrommotor 1a (z.B. wegen Störung in einer Aufwickelmechanik) weiterhin einen höheren Strom aufnehmen, so bleibt die Spannung am Messpunkt 4a länger als die durch R2/C1 bestimmte Zeitkonstante entsprechend hoch. Dadurch wird der Ausgang 3 der Kippstufe T1 inaktiv. Das bedeutet das Fehlen eines Basisstroms am Steuertransistor T2, der den Gleichstrommotor 1a somit abschaltet. In diesem Zustand schaltet die Kippstufe T1 intern den Ausgang 7 nach Masse, so dass ein Entladestrom aus dem Kondensator C1 über den Widerstand R3 fliessen kann. Da aber die Zeitkonstante des Gliedes R3/C1 10mal so gross wie diejenige des Gliedes R2/C1 gewählt ist, wird für diese 10mal längere Zeit der Gleichstrommotor 1a ausgeschaltet gehalten. Die Kippstufe T1 prüft durch dieses Laden und Entladen periodisch den Laststrom des Gleichstrommotors 1a.

Als Kippstufe T1 kommt ein bistabiler Multivibrator in Betracht oder eine andere Kippstufe mit ähnlicher oder gleicher Verhaltensweise. Es können auch entsprechend gestaltete Schmitt-Trigger oder Fenster-Diskriminatoren eingesetzt werden.

**Patentansprüche**

1. Schutzschaltungs-Vorrichtung für einen Gleichstrommotor (1a), insbesondere für einen Drucker-Aufwickel-Gleichstrommotor, wobei Messmittel (R1) zur Ableitung einer Messspannung aus dem Motorstrom und ein Steuer-Transistor (T2) zum Ein- und Ausschalten des Motorstroms in Reihe mit dem Motor (1a) vorgesehen sind, gekennzeichnet durch eine Kippstufe (T1) mit einem Ausgang (3), der im aktiven Zustand den Steuer-Transistor (T2) leitend steuert, mit einem Schwelleneingang (6), der den Ausgang (3) inaktiv schaltet, wenn die Spannung am Schwelleneingang (6) über einer oberen Spannungsgrenze liegt, und mit einem weiteren Eingang (2), der den Ausgang (3) aktiv schaltet, wenn die Spannung am weiteren Eingang (2) unter einer unteren Spannungsgrenze liegt, sowie durch einen mit dem Ausgang der Messmittel verbundenen Kondensator (C1), der die Spannungen an die Eingänge (6, 2) der Kippstufe (T1) abgibt, wobei der Kondensator (C1) durch die Messspannung mit einer bestimmten Zeitkonstante aufgeladenn wird und, wenn die Kippstufe inaktiv geschaltet ist, durch einen anderen Kreis mit einer ca. 10mal längeren Zeitkonstante entladen wird.

2. Vorrichtung nach Anspruch 1, dadurch gekennzeichnet, dass die untere Grenze $1/3$ der Versorgungsspannung und die obere Grenze $2/3$ der Versorgungsspannung beträgt.

3. Vorrichtung nach Anspruch 1, dadurch gekennzeichnet, dass dem Eingang (6) des Multivibrators (T1) ein Ladestromkreis bestehend aus den Elementen der Reihenschaltung eines Widerstands (R2), einer Diode (Di1) und eines Kondensators (C1) vorgeschaltet ist.

4. Vorrichtung nach Anspruch 1, dadurch gekennzeichnet, dass dem Eingang (2) des Multivibrators (T1) ein Entladestromkreis bestehend aus den Elementen der Reihenschaltung des Kondensators (C1) und dem Widerstand (R3) vorgeschaltet ist.

5. Vorrichtung nach den Ansprüchen 1 bis 4, dadurch gekennzeichnet, dass der Multivibrator (T1) aus dem Laststromkreis (2a) gespeist und seine Versorgungsspannung mittels einer Z-Diode (Di2) stabilisiert ist.

6. Vorrichtung nach den Ansprüchen 1 bis 5, dadurch gekennzeichnet, dass der im Laststromkreis (2a) an die Kippstufe (T1) angeschlossene Steuer-Transistor (T2) als Darlington-Stufe ausgeführt ist.

## Claims

1. Protective circuit arrangement for a direct-current motor (1a), in particular for a printing apparatus spool direct-current motor, in which measuring means (R1) are provided to divert a measuring voltage from the motor current and a control transistor (T2) is provided to switch the motor current on and off, in series with the motor (1a), characterized by a tumbler stage (T1) with an output (3) which in active state conductively controls the control transistor (T2), with a threshold input (6) which switches the output (3) inactive when the voltage at the threshold input (6) lies above an upper voltage threshold, and with a further input (2), which switches the output (3) active, when the voltage at the further input (2) lies below a lower voltage threshold, and also characterized by a condenser (C1) connected with the output of the measuring means, which transfers the voltages to the inputs (6, 2) of the tumbler stage (T1), in which the condenser (C1) is charged by the measuring voltage with a certain time constant and, when the tumbler stage is switched inactive, is discharged by another circuit with a time constant which is approximately 10 times longer.

2. Arrangement according to claim 1, characterized in that the lower threshold amounts to $1/3$ of the supply voltage and the upper threshold amounts to $2/3$ of the supply voltage.

3. Arrangement according to claim 1, characterized in that connected in series to the input (6) of the multivibrator (T1) is a charging circuit consisting of the elements of the series arrangement of a resistor (R2), a diode (Di1) and a condenser (C1).

4. Arrangement according to claim 1, characterized in that connected in series to the input (2) of the multivibrator (T1) is a discharging circuit consisting of the elements of the series arrangement of the condenser (C1) and the resistor (R3).

5. Arrangement according to claims 1 to 4, characterized in that the multivibrator (T1) is supplied from the load circuit (2a) and its supply voltage is stabilised by means of a Z-diode (Di2).

6. Arrangement according to claims 1 to 5, characterized in that the control transistor (T2) connected in the load circuit (2a) to the tumbler stage (T1) is constructed as a Darlington stage.

## Revendications

1. Dispositif de protection pour un moteur à courant continu (1a), en particulier pour un moteur à courant continu d'imprimante à enroulement, dans lequel on prévoit en série avec le moteur (1a), des moyens de mesure (R1) pour engendrer une tension de mesure à partir du courant du moteur et un transistor de commande (T2) pour le passage ou l'arrêt du courant du moteur, caractérisé par une bascule (T1) pourvue d'une sortie (3) qui, à l'état actif, commande en le rendant conducteur le transistor de commande (T2), pourvue d'une entrée à seuil (6), qui rend la sortie (3) inactive lorsque la tension à l'entrée à seuil (6) dépasse une limite de tension supérieure, et d'une autre entrée (2), qui rend la sortie (3) active lorsque la tension à l'autre entrée (2) se trouve en-dessous d'une limite de tension inférieure, ainsi que par un condensateur (C1) relié à la sortie des moyens de mesure et délivrant les tensions aux entrées (6, 2) de la bascule (T1), le condensateur (C1) étant chargé par la tension de mesure avec une constante de temps déterminée et, lorsque la bascule est inactive, étant déchargé par un autre circuit avec une constante de temps environ 10 fois plus grande.

2. Dispositif selon la revendication 1, caractérisé en ce que la limite inférieure s'élève à $1/3$ de la tension d'alimentation et la limite supérieure à $2/3$ de la tension d'alimentation.

3. Dispositif selon la revendication 1, caractérisé en ce que, en amont de l'entrée (6) du multivibrateur (T1) est disposé un circuit de courant de charge comportant les éléments d'un montage en série d'une résistance (R2), d'une diode (Di1) et d'un condensateur (C1).

4. Dispositif selon la revendication 1, caractérisé en ce que, en amont de l'entrée (2) du multivibrateur (T1) est disposé un circuit de courant de décharge comportant les éléments du montage en série du condensateur (C1) et de la résistance (R3).

5. Dispositif selon l'une des revendications 1 à 4, caractérisé en ce que le multivibrateur (T1) est alimenté par le circuit de courant de charge (2a) et en ce que sa tension d'alimentation est stabilisée par une diode de Zener (Di2).

6. Dispositif selon l'une des revendications 1 à 5, caractérisé en ce que le transistor de commande (T2) associé à la bascule (T1) dans le circuit de charge (2a) est monté un circuit de Darlington.